(19) **Europäisches Patentamt European Patent Office Office européen des brevets**

(11) **EP 4 691 621 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
**B01J 19/28** (2006.01)   **B01J 19/12** (2006.01)
**B01F 29/321** (2022.01)

(21) Application number: **24784463.2**

(52) Cooperative Patent Classification (CPC):
**B01F 29/321; B01J 19/12; B01J 19/28**

(22) Date of filing: **22.03.2024**

(86) International application number:
**PCT/ES2024/070188**

(87) International publication number:
**WO 2024/209120 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.04.2023 ES 202330283**

(71) Applicant: **Universitat de València**
**46010 Valencia (ES)**

(72) Inventors:
• **ESCORCIA ARIZA, Garin**
  **46010 Valencia (ES)**
• **MARTÍ GASTALDO, Carlos**
  **46010 Valencia (ES)**
• **MUÑOZ PADIAL, Natalia**
  **46010 Valencia (ES)**
• **TATAY AGUILAR, Sergio**
  **46010 Valencia (ES)**

(74) Representative: **Torner, Juncosa I Associats, SL**
**C / Pau Claris, 108, 1r 1a**
**08009 Barcelona (ES)**

(54) **DEVICE FOR CARRYING OUT CHEMICAL REACTIONS**

(57)  A device for carrying out chemical reactions. The device comprises a rotating platform configured for rotating around a central axis thereof, the rotating platform comprising a plurality of first receiving elements, each of which is designed for receiving one container; and a plurality of stirring mechanisms. Each stirring mechanism of the plurality of stirring mechanisms is arranged on or below each retaining element for magnetically stirring its corresponding container from below. The device further comprises a support for a light source, said support being fixedly arranged on the device, in such a way that, when the light source is secured on the support, light is radiated towards the rotating platform, laterally impinging on each container, when the latter passes in front of the support.

**FIG. 2A**

## Description

Technical Field

The present invention relates to a device for carrying out chemical reactions by means of light.

Background of the Invention

A chemical photoreactor is a device that uses light as an energy source for producing a certain chemical reaction. The speed of the reaction, among other factors, depends on the amount of light received and of its wavelength. Therefore, it is customary that the irradiation of the sample be carried out with a range of wavelengths limited to those necessary to drive the transformation to be tested. The light-emitting sources in a narrow range of wavelengths minimize the undesired heating and the secondary reactions. If the reaction being studied includes air-sensitive reagents or products, it is also important to maintain an inert atmosphere within the reactor. Lastly, and especially in the case wherein the reaction is carried out in a heterogeneous medium (liquid-solid, for instance) wherein the reacting phases will tend to separate, it is important to ensure a good homogenization of the reaction medium to avoid the overexposure of a part of the sample relative to another.

In high-throughput screening photoreactors, several samples (vials, for example) containing the different reagent mixtures to be tested are arranged forming a geometric pattern within the photoreactor. This geometric pattern is exposed to the energy emitted by a light source to initiate the reaction. The amount of light that a point (I) receives is inversely proportional to the distance separating that point from the light source:

$$I \propto d^{-n}$$

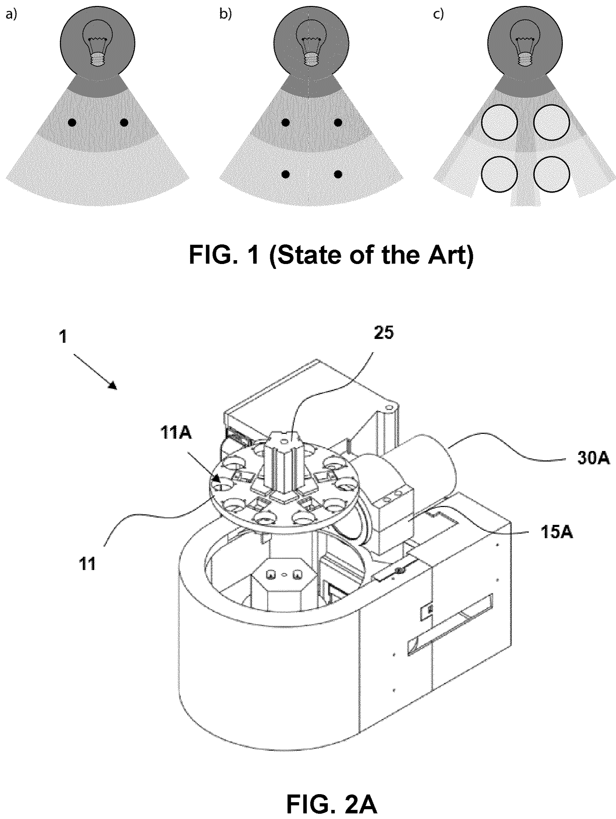

wherein, d is the distance separating the point from the light source and n is the proportionality factor: n = 2 for spot light sources and n = 1 for sources emitting parallel rays. This fact makes it difficult for an HTS photoreactor to illuminate all samples with exactly the same amount of light. This problem is exacerbated with the number of samples (area occupied by the pattern of the containers used, vials for example). In addition, it is further accentuated if the samples are not considered to be spots and non-absorbing, but rather volumes capable of absorbing part of the radiation. These problems are schematically exemplified in Fig. 1.

Likewise, some photoreactors are known in the state of the art wherein the sample matrix is rotated around its centroid.

For example, patent US10143992-B2 describes a reaction device for multiple samples. The device comprises a base, a supporting disc horizontally secured and assembled on the base, an upper disc assembled on the supporting disc, a rotating disc assembled under the supporting disc, and a series of reaction containers, where a series of light-transmitting apertures are circumferentially distributed on the supporting disc. The series of reaction vessels are placed in the light-transmitting apertures in a one-to-one correspondence. Likewise, a series of stirrers assembled between the upper disc and the supporting disc is included for stirring liquids in the reaction vessels. This device also includes a plurality of light sources which are arranged on an upper surface of the rotating disc for illumination, from below, the reaction vessels (a geometry that the device for carrying out chemical reactions of the present invention precisely wishes to avoid to thus maximize the surface of the radiated sample).

Patent application EP3821076-A1 discloses a radial chemical photoreactor. The photoreactor includes a rotating platform that can rotate around a first axis that is also the central axis of the system. In addition, a fastening mechanism fastens the reaction containers whose longitudinal directions are a central axis direction in a circumference around the first axis on the rotating platform at even intervals. The rotation mechanisms secure the bottoms of the reaction containers and, in turn, rotate the reaction containers around second axes which are, respectively, central axes of the reaction containers. It also includes light sources circumferentially arranged outside of the rotating stage, and stirring mechanisms arranged in the vicinity of the reaction containers and configured for rotating, by magnetic force, a number of stirring rods, respectively, around axes in orthogonal directions to the second axes. This type of stirring does not allow for the formation of a longitudinal stirring vortex along the axis of the reaction container. The device for carrying out chemical reactions of the present invention includes a stand-alone magnetic stirrer under each one of the containers that allows for a longitudinal -not orthogonal as in the case of EP3821976-A1- stirring and which can be controlled by each one of the containers, and, most importantly, independently from that of the platform. This ensures a homogeneous stirring in the case of heterogeneous samples.

On the other hand, the photoreactor of EP3821976-A1 includes a cover for isolating the containers from the outside and only permits the containers to be cylindrical. The device for carrying out chemical reactions of the present invention allows the use of containers of any shape, for example, square as would be the case of UV-Vis trays. In addition, the design of the cover allows the use of inert gas reservoirs for carrying out reactions in an inert atmosphere, which is not possible in the reactor of EP3821976-A1.

Other chemical photoreactors are disclosed in documents CN215743371-U, CN208694975-U and CN112007596-A, although none of them are high-throughput photoreactors (possibility of carrying out several chemical reactions in parallel), such as the device of the present invention.

Description of the Invention

An object of the present invention is to provide a device for carrying out high-throughput chemical reactions, wherein the samples are not kept static relative to the light source, but rather all of them describe the same periodic and circular path relative to the light source, such that, for sufficiently long radiation times the average distance (and, therefore, the average intensity received) for each one of them is homogeneous.

To that end, exemplary embodiments of the present invention provide, according to a first aspect, a device for carrying out chemical reactions, which comprises, as the known devices of the state of the art: a rotating platform configured for rotating around a central axis thereof, wherein the rotating platform comprises a plurality of first receiving elements, each of which is designed for receiving one container; and a plurality of stirring mechanisms.

Unlike the devices of the state of the art, in the proposed device each stirring mechanism of the plurality of stirring mechanisms is arranged on the rotating platform, next to each first receiving element, and is adapted for magnetically stirring its corresponding container from below. Likewise, the device further comprises a support, for embracing a light source, said support being fixedly arranged in the device, in such a way that, when the light source is secured on the support, the light radiates towards the rotating platform, laterally impinging on each container as the latter passes in front of the support.

According to the proposed device, the containers can have any shape/geometry, for example, square, cylindrical, etc.

In some exemplary embodiments, the rotating platform has radial symmetry.

In some exemplary embodiments, the device comprises a retaining mechanism with a plurality of second receiving elements. Each second receiving element is adapted for retaining a container when the container is arranged in a first receiving element.

In some exemplary embodiments, one or more interchangeable locking parts are also included that are particularly conformed to the shape of the containers, so as to enhance their securing/locking capability. For example, an upper locking part engages or fits in the second receiving elements, whereas a lower locking part engages or fits in the first receiving elements.

The retaining mechanism, in particular, also comprises a movable pin for each second receiving element.

In some exemplary embodiments, the movable pin and the upper locking part comprise an aperture allowing for the connection of a gas reservoir.

In some exemplary embodiments, the proposed device also includes a number of cooling means for maintaining the device at a constant temperature. For example, in a particular exemplary embodiment, the cooling means comprise a cooled radiator and a fan configured for producing a thermostatic air current towards the inside of the device.

In some exemplary embodiments, each stirring mechanism comprises a DC motor having a permanent magnet coupled therewith.

In particular, the device also includes an interchangeable controlling module, depending on the configuration of the device.

In some exemplary embodiments, the controlling module consists of one or more controlling units configured for controlling the speed of rotation of the rotating platform and/or of the plurality of stirring mechanisms. Likewise, the one or more controlling units can be configured for controlling the plurality of stirring mechanisms, individually. The one or more controlling units can even be configured for controlling the temperature within the device.

In some exemplary embodiments, the support comprises a flange- or clamp-type fastening element.

In some exemplary embodiments, the device includes a side cover adapted for surrounding .the rotating platform and whose inner surface is coated with a reflective material for thus improving the reflection of light within the device.

In some exemplary embodiments, a first upper cover attachable to the side cover is also included, so that light is not allowed to escape from the device. The first cover can be adapted to allow for the connection of the gas reservoirs.

In some exemplary embodiments, a second upper cover is also included, attachable to the first upper cover.

In some exemplary embodiments, the device also comprises at least a second support, for another light source.

Therefore, the present invention provides a device/apparatus for carrying out chemical reactions that permits to attach a regular light source thanks to the inclusion of said support, and wherein the position of the samples is not fixed, but rather the samples describe the same periodic and circular path relative to the secured light source, when the latter is attached to the support. This way, for sufficiently long radiation times the average distance (and, therefore, the intensity received) for each one of them will be the same. In addition, the proposed device includes individual stirring for each one of the samples, from below, for avoiding the overexposure of the reaction mixture, even in the case of heterogeneous mixtures.

Brief Description of the Drawings

The above and other characteristics and advantages will be more fully understood from the following merely illustrative and non-limiting detailed description of a number of exemplary embodiments, with reference to the attached drawings, wherein:

Fig. 1 illustrates: a) two spot samples that receive the same amount of light within the area illuminated by a lamp, the color intensity representing the light intensity; b) a matrix of four spot samples wherein not all samples receive the same amount of light; c) a matrix of four non-spot, adsorbent samples. In this case, the samples closest to the light source shield the light received by the farther away samples.

Figs. 2A-2H illustrate a device for carrying out chemical reactions, according to an exemplary embodiment of the present invention.

Fig. 3 illustrates, in more detail, the rotating platform and the stirring mechanisms of the device for carrying out chemical reactions of Figs. 2A-2H.

Figs. 4A-4C illustrate, in more detail, how the containers are fastened to the rotating platform, according to an exemplary embodiment of the present invention.

Fig. 5 illustrates another device for carrying out chemical reactions, according to another exemplary embodiment.

Fig. 6 illustrates another device for carrying out chemical reactions, according to another exemplary embodiment.

Detailed Description of the Invention and of Exemplary Embodiments

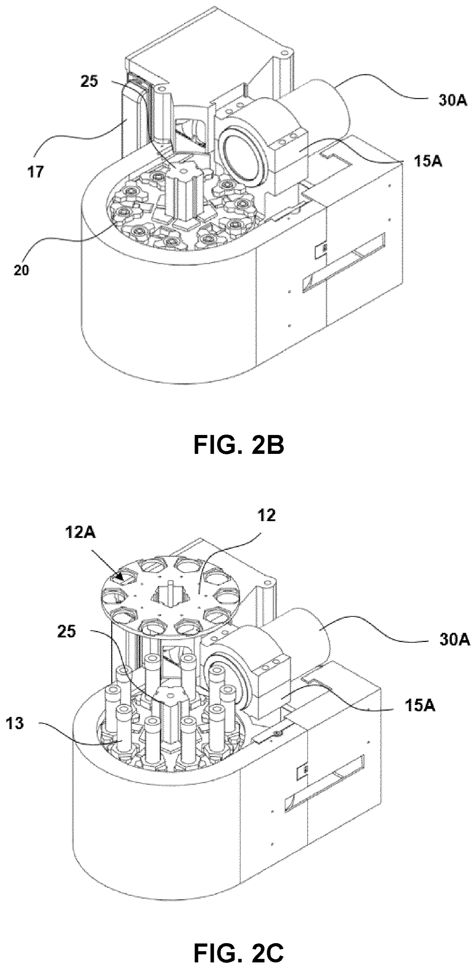

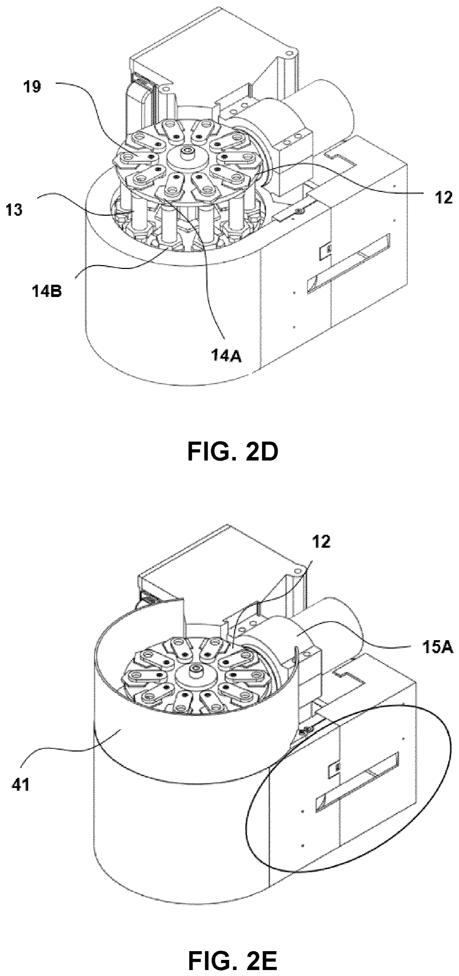

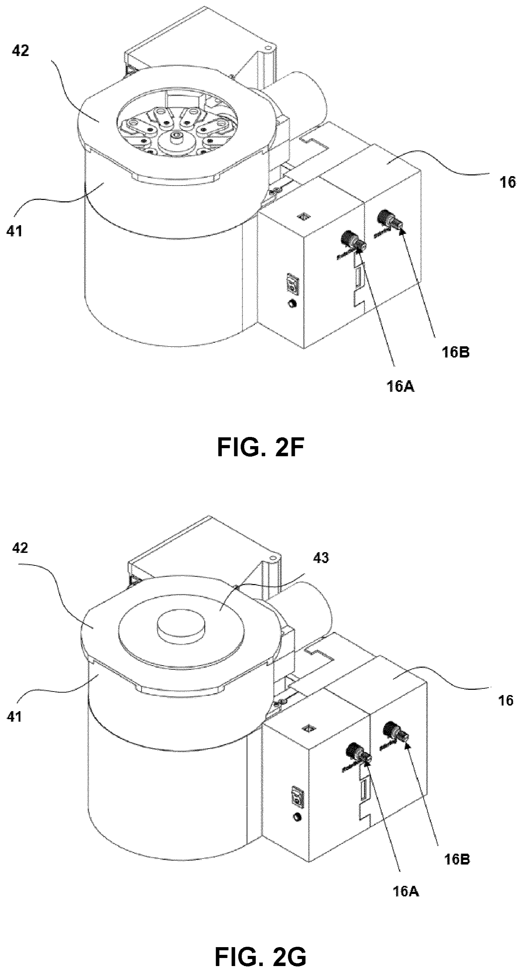

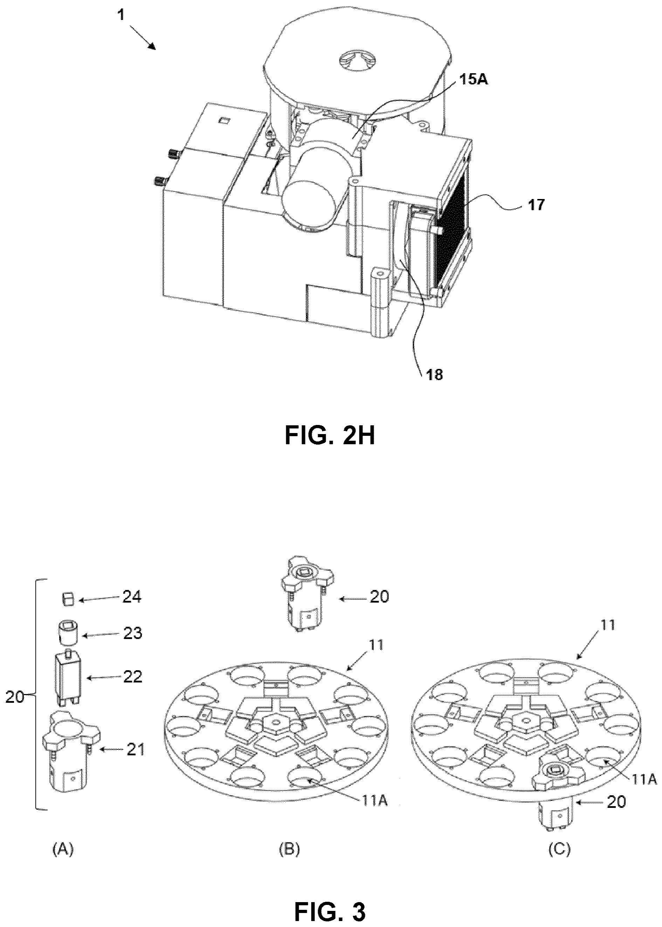

Figs. 2A-2H illustrate a first exemplary embodiment of the proposed device (1) for carrying out chemical reactions. In the proposed device (1), the sample/container (13) matrix rotates around the position of its centroid thanks to a rotating platform (11). In addition, the device (1) includes stirring mechanisms (20), one for each container (13), for ensuring the correct homogeneity of the reaction mixture even in the case of heterogeneous samples.

The device (1) also includes a support (15A), particularly of a flange- or clamp-type, for the attachment/fastening of a light source (30A). When the light source (30A) is secured on the support (15A), the light impinges laterally on each container (13) as the containers (13) pass in front of the support (15A). It must be noted that, although illustrated in the different figures, the light source is independent from the device (1). That is, the proposed device (1) allows for the use of any regular light source.

The rotating platform (11), in this particular case having radial symmetry, comprises a series of first receiving elements (11A), for each one of the containers (13). As illustrated in Fig. 2A, in this exemplary embodiment the first receiving elements (11A) comprise a number of openings. In any case, in other exemplary embodiments, not shown in this case, the first receiving elements comprise a number of cavities with a preset shape/geometry.

Each stirring mechanism (20), as illustrated in Fig. 3, particularly comprises (see Fig. 3A) a DC motor (22) having a permanent magnet (24) coupled with its axis through a coupler (23). In turn, the above components are mounted/assembled within a column/post (21). Each stirring mechanism (20) is anchored (see Fig. 3C) to each first receiving element (11A), for thus carrying out the magnetic stirring of a corresponding container (13) from the lower part thereof.

Continuing with the explanation of Figs. 2A-2H, the device (1) also includes a retaining mechanism (12) with a plurality of second receiving elements (12A) for fastening the containers (13) to the rotating platform (11). In particular, in the illustrated exemplary embodiments, the second receiving elements (12A) comprise a number of openings. In any case, in other non-illustrated examples, these elements can have a different configuration, for example, a number of cavities with a preset shape/-geometry. The retaining mechanism (12) is kept linked to the rotating platform (11) through a central column (25), which allows the adjustment of its height based on that of the container (13).

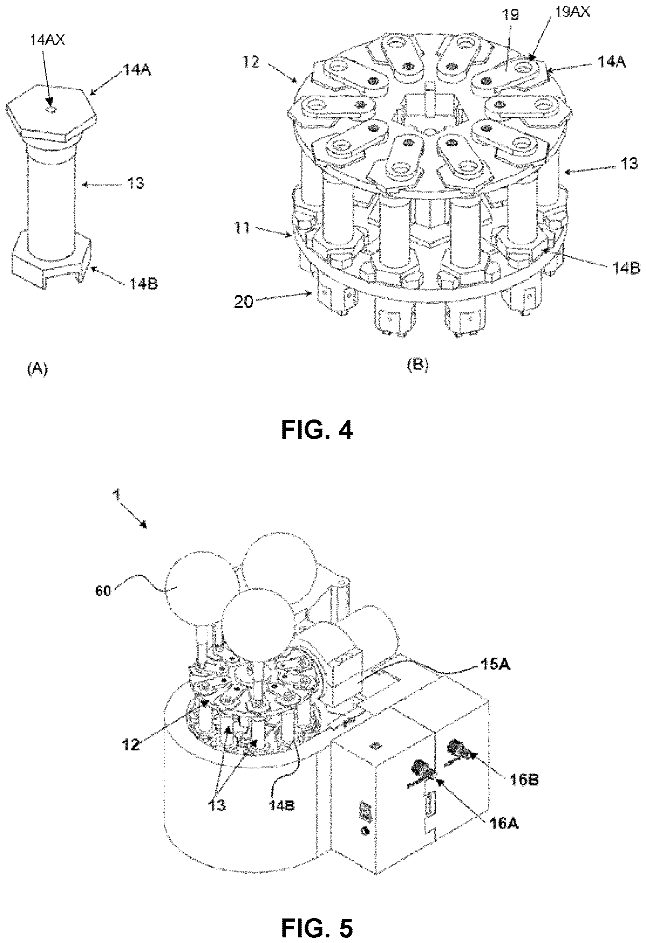

In particular, as illustrated in more detail in Fig. 4, in order to retain the containers (13) two additional retaining/locking parts are also used, -an upper part 14A and one lower one 14B (see views 4A and 4B)-, to which the container (13) is coupled. It must be noted that, in other exemplary embodiments, the containers (13) can be retained/locked by means of a single part, either the upper or the lower one. These additional parts are interchangeable and conform to the shape of the container (13) and allow the latter to be even more secured. In the example of Fig. 4, the lower part 14B is held on the lower rotating platform (11) whereas the upper part (14A) fits in the second receiving elements (12A) of the retaining mechanism (12).

The retaining mechanism (12), for each one of the second receiving elements (12A), comprises a movable pin (19) that allows for the easy placement and removal of the upper part (14A) without having to fully disassemble the retaining mechanism (12). In particular, both the movable pins (19) and the upper part (14A) have apertures (19AX and 14AX, respectively) for connecting a gas reservoir (60), see Fig. 5. In any case, it must be noted that the inclusion of said apertures is not limiting, since in other exemplary embodiments said apertures may not be included.

The proposed device (1) also includes a cooled radiator (17) and a fan (18) as cooling means of the device (1).

Likewise, the device (1) includes a space/area (outlined in Fig. 2E) for the connection of a controlling module (16). The controlling module (16) is designed to be interchangeable depending on the configuration of the device (1). According to the illustrated exemplary embodiment, the controlling module (16) comprises two analog controlling units or elements (16A, 16B). The control of the speed of rotation of the rotating platform (11) is carried out by means of a controlling unit or element (16A), whereas the control of the stirring speed of the stirring mechanisms (20) is carried out by means of a controlling unit or element (16B).

It must be noted that, in other non-illustrated exemplary embodiments, the controlling units or elements (16A, 16B) can be digital.

The controlling units or elements (16A, 16B) can also control the cooling of the device (1). Alternatively, the controlling module (16) can include additional controlling elements to carry out said cooling control. Likewise, the controlling element (16B) can be substituted for multiple controlling elements, for example, one for each stirring mechanism (20), in such a way that each controlling element would be adapted or configured for controlling the different stirring mechanisms (20), individually. The controlling module (16) can even comprise a single controlling unit/element, which, by means of different control positions, can control both the rotating platform (1) and the stirring mechanisms (20) and even the cooling.

As illustrated in Figs. 2E-2G, the device (1), optionally, also includes one or more covers. One of the covers, the one (41) on the side and surrounding the rotating platform (11) is particularly intended to improve the reflection of light within the device (1). To that end, the inner surface of the side cover (41) is reflective. The purpose of the cover (42) is to prevent any light to escape from the device (1). In particular, this first upper cover (42) comprises a hole or opening for connecting the gas reservoirs (20). The second upper cover (43) can be put in place when the gas reservoirs (20) are not used.

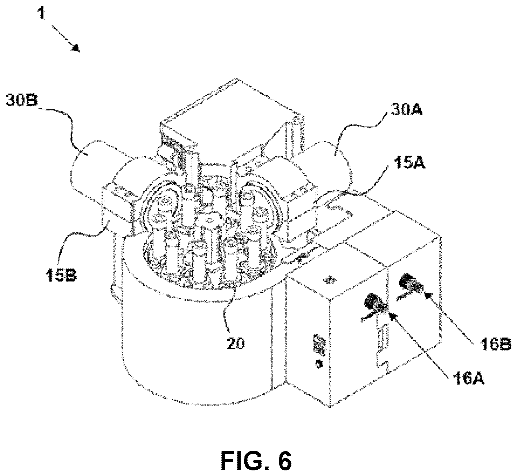

With reference now to Fig. 6, another exemplary embodiment of the proposed device (1) is illustrated therein. **In** this case, the device (1) comprises two supports (15A, 15B), each of which has the purpose of attaching/fastening a light source (30A, 30B).

The scope of the present invention is defined in the attached claims.

**Claims**

1. A device for carrying out chemical reactions, comprising:

   a rotating platform (11) configured for rotating around a central axis thereof, wherein the rotating platform (11) comprises a plurality of first receiving elements (11A), each of which is designed for receiving one container (13); and
   a plurality of stirring mechanisms (20);

   **characterized in that:**
   each stirring mechanism (20) of the plurality of stirring mechanisms (20) is arranged on the rotating platform (11), next to each first receiving element (11A), and is adapted for magnetically stirring its corresponding container (13) from below;
   and **in that** the device (1) further comprises:
   a support (15A) for a light source (30A), said support (15A) being fixedly arranged on the device (1), in such a way that, when the light source (30A) is secured on the support (15A), the light radiates towards the rotating platform (11), laterally impinging on each container (13), when the latter passes in front of the support (15A).

2. The device according to claim 1, wherein the rotating platform (11) has radial symmetry.

3. The device according to any one of the previous claims, further comprising a retaining mechanism (12) with a plurality of second receiving elements (12A), each second receiving element (12A) being adapted for allowing the reception of a container (13) when the latter is arranged in a first receiving element (11A).

4. The device according to claim 3, further comprising one or more locking parts (14A, 14B) adapted to the shape of the container (13), wherein an upper locking part (14A) of said locking parts (14A, 14B) is adapted for engaging a second receiving element (12A) and another lower locking part (14B) of said locking parts (14A, 14B) is adapted for engaging a first receiving element (11A).

5. The device according to claim 4, wherein the retaining mechanism (12) further comprises a movable pin (19) associated with each second receiving element (12A).

6. The device according to claim 5, wherein each movable pin (19) and each upper locking part (14A) comprise an aperture (19AX, 14AX) for the connection of a gas reservoir (60).

7. The device according to any one of the previous claims, wherein each first receiving element (11A) and/or each second receiving element (12A) comprise an opening or cavity with a preset shape.

8. The device according to any one of the previous claims, further comprising cooling means for maintaining the device (1) at a constant temperature.

9. The device according to claim 8, wherein the cooling means comprise a cooled radiator (17) and a fan (18) configured for producing a thermostatic air current towards the inside of the device (1).

10. The device according to any one of the previous claims, wherein each stirring mechanism (20) comprises a DC motor (22) having a permanent magnet (24) coupled therewith.

11. The device according to any one of the previous claims, further comprising an interchangeable controlling module (16) for the control of the device (1).

12. The device according to claim **11,** wherein the controlling module (16) comprises one or more controlling units (16A, 16B) configured for controlling, at least, the speed of rotation of the rotating platform (11) and/or of the plurality of stirring mechanisms (20).

13. The device according to claim 12, wherein the one or more controlling units (16A, 16B) are configured for controlling the plurality of stirring mechanisms (20) individually.

14. The device according to any one of the previous claims, further comprising a side cover (41) adapted for surrounding the rotating platform (11) and including a reflective inner surface in order to improve the reflection of light within the device (1).

15. The device according to claim 14, further comprising a first upper cover (42), attachable to the side cover (41), so that light is not allowed to escape from the device (1).

16. The device according to claim 15, further comprising a second upper cover (43), attachable to the first upper cover (42).

17. The device according to any one of the previous claims, wherein the container (13) has a square or cylindrical shape.

18. The device according to any one of the previous claims, wherein the support (15A) comprises a flange- or clamp-type fastening element.

19. The device according to any one of the previous claims, further comprising at least a second support (15B) for another light source (30B).

a)        b)        c)

# FIG. 1 (State of the Art)

# FIG. 2A

FIG. 2B

FIG. 2C

FIG. 2D

FIG. 2E

42

16

41

16B

16A

**FIG. 2F**

42

43

16

41

16B

16A

**FIG. 2G**

**FIG. 2H**

(A)          (B)          (C)

**FIG. 3**

**FIG. 4**

**FIG. 5**

EP 4 691 621 A1

FIG. 6

13

## INTERNATIONAL SEARCH REPORT

| | International application No. |
|---|---|
| | PCT/ES2024/070188 |

### A. CLASSIFICATION OF SUBJECT MATTER

See extra sheet

According to International Patent Classification (IPC) or to both national classification and IPC

### B. FIELDS SEARCHED

Minimum documentation searched (classification system followed by classification symbols)
B01J, B01F

Documentation searched other than minimum documentation to the extent that such documents are included in the fields searched

Electronic data base consulted during the international search (name of data base and, where practicable, search terms used)

EPODOC, INVENES, WPI

### C. DOCUMENTS CONSIDERED TO BE RELEVANT

| Category* | Citation of document, with indication, where appropriate, of the relevant passages | Relevant to claim No. |
|---|---|---|
| A | EP 3821975 A1 (CELLSYSTEM CO LTD) 19/05/2021, paragraphs[4 - 18]; figure 1 | 1-19 |
| A | WO 2018098189 A1 (HEPATOCHEM INC) 31/05/2018, paragraphs[8 - 17]; figure 1 | 1-19 |
| A | CN 114019089 A (SHANGHAI ANJIE ENV PROT SCI & TECH CO LTD) 08/02/2022, (abstract) figure 1 | 1-19 |
| A | CN 113559805 A (UNIV XINZHOU TEACHERS) 29/10/2021, (abstract) figure 2 | 1-19 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 29/05/2024 | **(31/05/2024)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | B. Aragón Urueña Telephone No. 913493277 |

Form PCT/ISA/210 (second sheet) (July 2022)

## INTERNATIONAL SEARCH REPORT

Information on patent family members

| | International application No. |
|---|---|
| | PCT/ES2024/070188 |

| Patent document cited in the search report | Publication date | Patent family member(s) | Publication date |
|---|---|---|---|
| EP3821975 A1 | 19.05.2021 | US2021138427 A1<br>US11918968 B2<br>JP2021074685 A<br>JP6791518B B1 | 13.05.2021<br>05.03.2024<br>25.11.2020<br>25.11.2020 |
| WO2018098189 A1 | 31.05.2018 | JP2020516440 A<br>US2019270065 A1<br>US10906022 B2<br>CN109996603 A<br>CN109996603B B<br>EP3544726 A1<br>EP3544726 A4 | 11.06.2020<br>05.09.2019<br>02.02.2021<br>09.07.2019<br>02.09.2022<br>02.10.2019<br>03.06.2020 |
| CN114019089 A | 08.02.2022 | NONE | |
| CN113559805 A | 29.10.2021 | CN113559805B B | 16.08.2022 |

Form PCT/ISA/210 (patent family annex) (July 2022)

## INTERNATIONAL SEARCH REPORT

International application No.

PCT/ES2024/070188

CLASSIFICATION OF SUBJECT MATTER

*B01J19/28* (2006.01)
*B01J19/12* (2006.01)
*B01F29/321* (2022.01)

Form PCT/ISA/210 (extra sheet) (July 2022)

**EP 4 691 621 A1**

**Patent documents cited in the description**

- US 10143992 B2
- EP 3821076 A1
- EP 3821976 A1
- CN 215743371 U
- CN 208694975 U
- CN 112007596 A